# EUROPÄISCHE PATENTANMELDUNG

(11) **EP 1 589 406 A2**
(43) Veröffentlichungstag der Anmeldung: **26.10.2005**
(21) Anmeldenummer: 05102427.1
(22) Anmeldetag: 24.03.2005
(51) Int. Cl.: G06F 3/023

(54) **Bedieneinheit für Benutzer mit Tasten mit zweifacher Funktion**

(30) Priorität: 22.04.2004 DE 102004019473
(71) Anmelder: ROBERT BOSCH GMBH, 70442 Stuttgart (DE)
(72) Erfinder: Flick, Bernd, 31199 Diekholzen (DE); Modler, Holger, 31139 Hildesheim (DE); Dahlhoff, Achim, 31141 Hildesheim (DE)

(57) **Zusammenfassung**

Es wird eine Bedieneinheit für ein elektronisches Gerät mit einer Anzeige und benachbart zu der Anzeige angeordneten Tasten vorgeschlagen, für die zwei Beleuchtungszustände möglich sind. In einem ersten Beleuchtungszustand sind die in den Tasten dargestellten Funktionen auswählbar. In einem weiteren Beleuchtungszustand können mit einer Betätigung der Tasten den Tasten zugeordnete, in der Anzeige dargestellte Funktionen aufgerufen werden.

## Beschreibung

### Stand der Technik

Die Erfindung geht aus von einer Bedieneinheit für ein elektronisches Gerät nach der Gattung des Hauptanspruchs. Aus der DE 100 23 783 A1 ist ein Verfahren und eine Vorrichtung zur Ansteuerung von Soft-Keys bekannt, bei der die aktuelle Belegung der Soft-Keys in einer Anzeige dargestellt wird. Ergänzend hierzu ist eine Eingabeeinheit mit einer festen Tastenzuordnung vorgesehen, bei der übergeordnete Funktionen über eine gesonderte Bedieneinheit aufrufbar sind. Für diese gesonderte Bedieneinheit wird jedoch eine zusätzliche Fläche auf der Eingabeeinheit benötigt. Aus der DE 101 03 335 A1 ist ein Bedienelement für ein elektronisches Gerät bekannt, das an einer Oberseite eine Anzeige aufweist, die unterschiedliche Funktionen des Geräts kennzeichnet. Dies ermöglicht eine räumlichen Anordnung einer Taste unabhängig von einer Anzeige, wie sie ein Soft Key erfordert. Hierbei ist die auf der Taste vorliegende Anzeigefläche klein. Ferner ist eine Ansteuerung für die wechselnde Bilddarstellung erforderlich.

### Vorteile der Erfindung

Die Bedieneinheit für ein elektronisches Gerät mit den Merkmalen des Hauptanspruchs hat demgegenüber den Vorteil, dass neben einer Anzeige angeordnete Tasten zwischen zwei Beleuchtungszuständen so umgeschaltet werden können, dass sie in dem einen Beleuchtungszustand entsprechend auswählbare Funktionen anzeigen, während sie in dem anderen Beleuchtungszustand als Softkey dienen, indem sie mit dargestellten Funktionen in der benachbarten Anzeige zusammenwirken. Ein Benutzer kann somit jeweils zwischen einer in der Taste dargestellten Funktion und einer in der Anzeige dargestellten Funktionen unterscheiden. Indem eine Anordnung zusätzlicher Bedienelemente eingespart werden kann, können zudem die Produktionskosten für die Bedieneinheit gesenkt werden.

Durch die in den Unteransprüchen aufgeführten Maßnahmen sind vorteilhafte Weiterbildungen und Verbesserungen der im Hauptanspruch angegebenen Bedieneinheit möglich. Besonders vorteilhaft ist ferner, dass die auf den Tasten dargestellten Funktionen Hauptfunktionen des elektronischen Geräts sind, so dass auf die Anordnung zusätzlicher Bedienelemente zum Aufrufen von Hauptfunktionen, die zur besseren Orientierung des Benutzers besonders hervorgehoben werden sollten, verzichtet werden kann. Eine feste Zuordnung der Bedienelemente zu Hauptfunktionen kann somit durch eine variable Darstellung von auswählbaren und insbesondere auch änderbaren Unterfunktionen bequem erweitert werden. Bei der Auswahl kann ein Benutzer dabei unmittelbar erkennen, ob er eine Hauptfunktion oder eine Unterfunktion auswählt. Befmdet er sich bereits in einem Untermenü, so kann er nicht versehentlich eine Hauptfunktion auswählen, da in dem Untermenü das Auswählen einer Hauptfunktion im allgemeinen nicht vorgesehen wird.

Ferner ist es vorteilhaft, zur besseren Orientierung des Benutzers, in dem Untermenü darzustellen, auf welche Hauptfunktion sich das dargestellte Untermenü bezieht.

Ferner ist es vorteilhaft, dem Benutzer eine Menütaste zum Zurückschalten auf die Hauptfunktion anzubieten, so dass er ohne eine Detailauswahl vornehmen zu müssen, unmittelbar in das Hauptmenü zurück wechseln kann.

Zur Information des Fahrers ist der erste Beleuchtungszustand so ausgeführt, dass eine Tastenbeschriftung bzw. ein Symbol zur Funktionskennzeichnung sichtbar ist. Ferner ist die Bedieneinheit bevorzugt so ausgeführt, dass diese Funktionskennzeichnung in dem zweiten Beleuchtungszustand nicht sichtbar ist, so dass ein Benutzer durch sie nicht irritiert wird. Vielmehr erhält er die Information über die Funktion der Taste aus einem Anzeigebereich benachbart zu der Anzeige, indem die mit der Taste in dem entsprechenden Zustand der Bedieneinheit auswählbare Funktion angezeigt wird.

Ferner ist vorteilhaft, dass zumindest in dem zweiten Beleuchtungszustand ein Tastenrand beleuchtet wird, so dass ein Benutzer auch im Dunkeln die Lage der Taste erkennen kann. Ferner sind zur Realisierung der mindestens zwei Beleuchtungszustände in einer bevorzugten Ausführungsform zumindest zwei Lichtquellen in die Tasten jeweils eingebracht.

### Zeichnung

Ausführungsbeispiele der Erfindung sind in der Zeichnung dargestellt und in der nachfolgenden Beschreibung näher erläutert. Es zeigen
Figur 1 eine Fahrerinformationsvorrichtung mit einer erfindungsgemäßen Bedieneinheit in einem ersten Ausführungsbeispiel,
Figur 2 eine Fahrerinformationsvorrichtung mit einer erfindungsgemäßen Bedieneinheit in einem zweiten Ausführungsbeispiel,
Figur 3 eine Ansicht einer erfindungsgemäßen Bedieneinheit in einem ersten Beleuchtungszustand,
Figur 4 eine Ansicht einer erfindungsgemäßen Bedieneinheit in einem zweiten Beleuchtungszustand,
Figuren 5 und 6 eine Taste für eine erfindungsgemäße Bedieneinheit in einem Längsschnitt und in einem Querschnitt.

### Beschreibung des Ausführungsbeispiels

Die Erfindung kann zur Bedienung beliebiger elektronischer Geräte verwendet werden. Insbesondere ist eine Verwendung einer erfindungsgemäßen Bedieneinheit dann vorteilhaft, wenn eine relativ geringe Fläche zur Anbringung von Bedientasten bzw. Bedieneinheiten zur Verfügung steht. Im allgemeinen ist dies in Kraftfahrzeugen der Fall, in denen an einem begrenzten Bedienplatz, z.B. im Bereich der Mittelkonsole, eine Vielzahl von Steuerungselementen angeordnet werden muss. Während eine Vielzahl von Funktionen zu steuern sind, darf ein Fahrer durch die Bedienelemente jedoch nicht vom Fahrgeschehen abgelenkt werden. Daher ist die vorliegende Erfindung im Folgenden am Beispiel einer Bedieneinheit für eine Fahrerinformationsvorrichtung in einem Kraftfahrzeug erläutert.

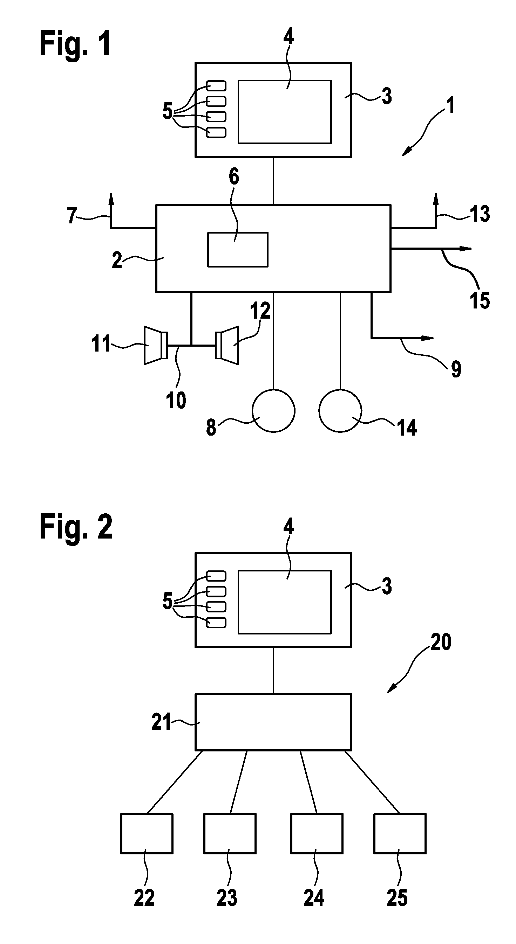

In der Figur 1 ist eine Fahrerinformationsvorrichtung 1 dargestellt, die eine Zentraleinheit 2 aufweist, an die eine Anzeige- und Bedieneinheit 3 mit einer Anzeige 4 und Tasten 5 angeordnet ist. Die Zentraleinheit 2 weist eine Recheneinheit 6 auf, die eine Vielzahl von Funktionen der Fahrerinformationsvorrichtung 1 steuert. Die Fahrerinformationsvorrichtung 1 weist eine Navigationsfunktion auf, wobei eine aktuelle Position des Fahrzeugs über eine Ortungseinheit 7 bestimmt wird. Über Drücken einer entsprechenden Taste 5 kann ein Benutzer die Fahrerinformationsvorrichtung 1 in einen Navigationsmodus umschalten. Über eine Unterfunktion kann er durch Zusammenwirken der Tasten 5 mit in der Anzeige 4 dargestellten Auswahlfeldern ein Fahrziel auswählen und eingeben. Die Recheneinheit 6 berechnet ausgehend von der aktuellen, über die Ortungseinheit 7 bestimmten Position eine Fahrtroute zu dem ausgewählten Fahrziel, wobei über die Anzeige dem Fahrer Fahranweisungen ausgegeben werden, um den Fahrer zu dem Fahrziel zu führen. Die Zentraleinheit 2 kann hierzu auf einen Datenträger 8 zugreifen, auf dem Straßenkartendaten gespeichert sind.

Ferner ist die Zentraleinheit 2 an ein Fahrzeugbussystem 9 anschließbar, wobei sie Fahrzeugdaten auswerten und dem Benutzer in der Anzeige 4 darstellen kann. Ferner ist die Zentraleinheit 2 dazu ausgelegt, über eine Audioausgabe 10, insbesondere ein Stereosystem mit zwei Lautsprechern 11, 12 eine Tonausgabe vorzunehmen. So kann über die Anzeige- und Bedieneinheit 3 ein über eine Antenneneinheit 13 empfangbarer Sender ausgewählt und über die Audioausgabe 10 ausgegeben werden. Ferner können auch Musikstücke von einem Datenträger in einem Datenträgerlaufwerk 14 ausgegeben werden, das z.B. zur Aufnahme von CDs oder DVDs vorgesehen ist. Ferner kann auch ein Videoprogramm mit der Anzeige 4 dargestellt werden, wobei entweder Fernsehsignale über die Antenneneinheit 13 empfangen werden oder Videosignale von dem Datenträger in dem Datenträgerlaufwerk 14 ausgelesen werden. Audio- und Videosignale können über eine Datenschnittstelle 15 auch an weitere Systeme im Fahrzeug übermittelt werden.

In der Figur 2 ist eine weitere Ausführungsform einer Fahrerinformationsvorrichtung 20 dargestellt, die sich von der ersten Ausführungsform dadurch unterscheidet, dass die Anzeige- und Bedieneinheit 3 in dem vorliegenden Fall an eine Zentraleinheit 21 angeschlossen ist, jedoch selbst nur dazu ausgelegt ist, Einzelgeräte, wie z.B. ein Navigationsgerät 22, einen CD-Spieler 23, eine Autoradiovorrichtung 24 und eine Fernsehempfangseinheit 25 zu steuern, die entsprechenden Daten von den einzelnen Einheiten abzurufen und gegebenenfalls zur Ausgabe über die Anzeige- und Bedieneinheit 3 sowie über die Audioausgabe 10 zu leiten. Eine Audioausgabe kann von den einzelnen Komponenten selbst vorgenommen werden bzw. auf einen Audiosignalbus zu einem geeigneten Ausgabegerät gegeben werden, der in der Figur 2 nicht dargestellt ist.

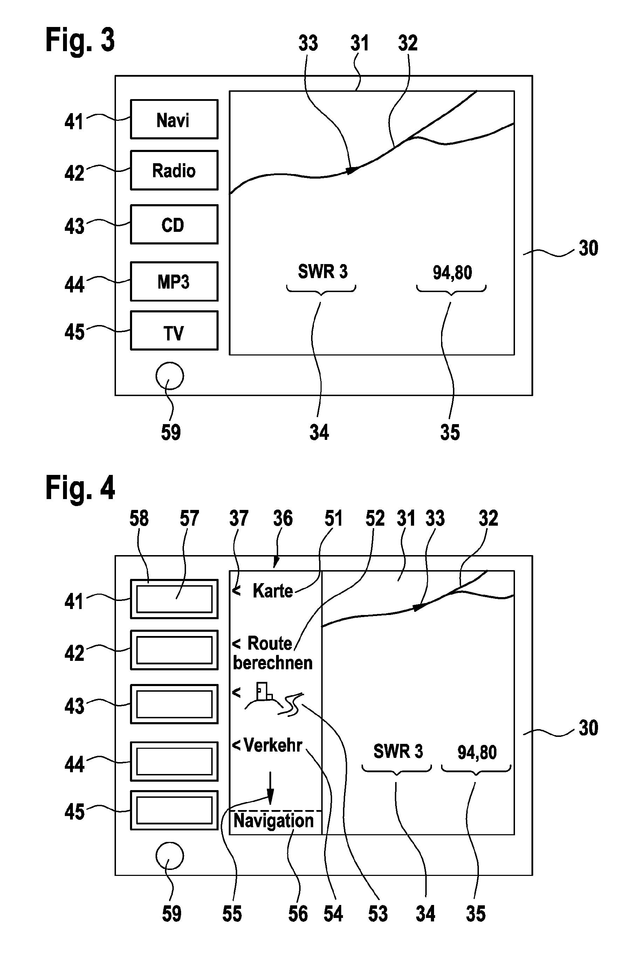

Im Folgenden ist eine erfmdungsgemäße Bedieneinheit im Detail dargestellt. In der Figur 3 ist eine Bedieneinheit 30 gezeigt, die auch zur Anzeige von Informationen dient. Die Ausgabe von Informationen ist jedoch für das Funktionieren der Bedieneinheit 30 selbst nicht unmittelbar notwendig. Informationen können auch über weitere Bildschirme ausgegeben werden, während die Bedieneinheit 30 nur der Steuerung und der Ausgabe von Steuerungs-Informationen dient. Im vorliegenden Fall ist jedoch die Funktion der Bilddatenausgabe in die Bedieneinheit 30 mit integriert. In einer Anzeige 31 ist eine Kartendarstellung 32 dargestellt, wobei eine aktuelle Fahrzeugposition mittels einer Markierung 33 besonders hervorgehoben ist. Die Anzeige 31 ist bevorzugt als eine Punkt-Matrix-Anzeige, insbesondere als eine Flüssigkristallanzeige, ausgeführt. Zudem ist der Name 34 eines aktuell eingestellten Senders, dessen Musik wiedergegeben wird, sowie dessen Frequenz 35 in der Anzeige dargestellt. Benachbart zu der Anzeige sind fünf Bedientasten 41, ..., 45 angeordnet, von denen jeweils ihre Funktion ablesbar ist. Durch entsprechende Pfeildarstellungen 37 wird eine Zuordnung zwischen den Beschriftungen und den Tasten 41,..., 45 geschaffen.
In einer ersten Taste 41 ist der Text "Navi" oder "Navigation" (nicht gezeigt) dargestellt. Durch ein Drücken der ersten Taste 41 wird ein Untermenü zur Fahrzeugnavigation aufgerufen, das anhand der Figur 4 im Folgenden noch erläutert wird.

Die zweite Taste 42 weist die Beschriftung "Radio" auf. Drückt man die zweite Taste 42, so wird ein Menü von Unterfunktionen zur Radiosteuerung aufgerufen. Mit einer ersten Unterfunktion kann z.B. die Radiolautstärke, also die Lautstärke einer Musikwiedergabe, eingestellt werden. Ferner wird durch ein Drücken z.B. der zweiten Bedientaste ein weiteres Untermenü zum Aufrufen eines anderen Senders eingestellt, mit dem man die Frequenz und/oder den Namen des eingestellten Senders ändern kann, so dass die Musik von dem nunmehr neu eingestellten Sender wiedergegeben wird.

Über eine dritte Taste 43 kann auf eine CD-Wiedergabe umgeschaltet werden. Die dritte Taste 43 trägt hierzu die Aufschrift "CD". Gegebenenfalls wird ein Untermenü angezeigt, mittels dem Funktionen wie z.B. das Auswählen einzelner Lieder auf der CD ermöglicht werden. Eine vierte Taste 44 trägt die Aufschrift "MP3" mittels der auf den Betrieb eines MP3-Spielers umgeschaltet werden kann. Musikstücke im MP3-Format werden entweder von einer Speichereinheit, wie z.B. einer Speicherkarte, einer Festplatte oder einem Arbeitsspeicher wiedergegeben. Eine fünfte Taste 45 trägt die Aufschrift "TV". Sie dient zur Wiedergabe eines empfangenen Fernsehprogramms.

Unter Hauptfunktionen sind solche Funktionen zu verstehen, die auf einer höchsten Menüebene zur Steuerung der Fahrerinformationsvorrichtung vorgesehen sind. Unterhalb dieser Menü-Ebene sollen keine weiteren Auswahlfunktionen angegeben werden. Gegebenenfalls kann es möglich sein, eine Einschalte- bzw. Ausschalte-Funktion dieser Menüebene gegenüber höher zu stellen. Eine Einschalte- bzw. Ausschalte-Funktion kann jedoch auch unmittelbar in die Menge der Hauptfunktionen eingereiht sein.

In einer ersten Ausführungsform können die Tasten aus einem hellen, diffustransparenten Material ausgeführt sein, so dass in unbeleuchtetem Zustand die Aufschrift nicht erkennbar ist. Wird die Taste jedoch von innen beleuchtet, so sind die Beschriftungen lesbar, die dunkel auf das diffus-transparente Material von der Innenseite zwischen Tastendeckel und Beleuchtungsquelle aufgebracht sind, da sich die dunkle Schrift von der Hintergrundbeleuchtung abhebt. Ebenfalls ist eine inverse Darstellung möglich, bei der nur ein geringer Teil der Taste von einer lichtdichten Abdeckung freigelassen wird und in einer ansonsten dunkel erscheinenden Taste bei Beleuchtung hell der lesbare Schriftzug erscheint. Den in den Tasten dargestellten Funktionen sind dabei keine weiteren Funktionen übergeordnet. Die dargestellten Funktionen stellen somit das Hauptmenü der Anzeige dar.

Wird eine der Tasten 41, 42, 43, 44, 45 betätigt, so wird zur Darstellung eines jeweils zugeordneten Untermenüs umgeschaltet. Beispielhaft wird dies anhand der Figur 4 erläutert, in der ein Untermenü für eine Navigationsfunktion dargestellt wird. Dieses Untermenü wird entsprechend nach einer Betätigung der ersten Taste 41 angezeigt. Die Kartendarstellung 32 sowie die Anzeige des Sendernamens 34 und der Senderfrequenz 35 werden in der Anzeige 31 entsprechend räumlich angepasst. Benachbart zu den Tasten 41, 42, 43, 44, 45 wird ein Bereich 36 der Anzeige für die Anzeige der auswählbaren Unterfunktionen bereitgestellt. Eine erste Unterfunktion 51 mit der Bezeichnung "Karte" wird der ersten Taste 41 zugeordnet. Durch ein Drücken der ersten Taste 41 kann nunmehr die Unterfunktion für eine Kartenauswahl aufgerufen werden. Damit können bestimmte Optionen einer Karteneinstellung, wie z.B. der Maßstab, verändert werden.

Betätigt der Benutzer nun die zweite Taste 42, so wird die Funktion "Route berechnen" aufgerufen, wobei diese Funktion als eine zweite Unterfunktion 52 in dem Bereich 36 bezeichnet ist. Damit kann ein Fahrziel eingegeben werden, zu dem eine Fahrtroute berechnet werden soll und entlang der das Fahrzeug geführt werden soll. Betätigt der Benutzer eine dritte Taste 43, so kann er Informationen zu Sehenswürdigkeiten abrufen und diese Sehenswürdigkeiten gegebenenfalls als ein Fahrziel für die Navigation auswählen. Anstelle einer Beschriftung ist hierzu ein Symbol 53 angegeben, das für Sehenswürdigkeiten steht. Anstelle von Beschriftungen können auch bei anderen auswählbaren Funktionen Symbole verwendet werden, die ein Benutzer auswählen kann, so dass die Unterfunktionen auch durch in der Anzeige 31 dargestellte Symbole gekennzeichnet sein können. Der vierten Taste 44 ist die Beschriftung 54 "Verkehr" zur Auswahl von Verkehrsinformationen in dem Bereich 36 zugeordnet. Weitere Menüpunkte, wie z.B. ein Fahrtenbuch oder die Anzeige von Tank- und Raststätten kann über eine Betätigung der fünften Taste 45 ausgewählt werden, indem zu einem weiteren, nicht dargestellten Menü mit anderen, auswählbaren Unterfunktionen zu der Hauptfunktion bzw. zu einer Unterfunktion zur weiteren Auswahl ausgehend von dieser übergeordneten Unterfunktion umgeschaltet wird. Zur Kennzeichnung des Aufrufens weiterer Funktionen ist z.B. eine Pfeil-nach-unten-Darstellung 55 möglich. Die Hauptfunktion, der die in dem Bereich 36 dargestellten Unterfunktionen zugeordnet sind, ist optional durch eine Text- oder Symbolangabe 56, hier die Beschriftung "Navigation", kenntlich gemacht.

In der Figur 3 sind die Tasten 41, ..., 45 in einem ersten Beleuchtungszustand dargestellt, der die Tastenbeschriftung jeweils lesbar macht. In der Figur 4 liegen die Tasten 41, ..., 45 in einem zweiten Beleuchtungszustand vor. In einer ersten Ausführungsform sind die Tasten 41, ..., 45 in dem zweiten Beleuchtungszustand unbeleuchtet. Eine weitere, bevorzugte Ausführungsform wird anhand der ersten Taste 41 erläutert. Die ersten Taste 41 weist einen zentralen, unbeleuchteten Bereich 57 auf. Dieser wird von einem Rand 58 umgeben, der den äußeren Tastenrand umfasst. Nur der Rand 58 wird in dem zweiten Beleuchtungszustand beleuchtet. In dem ersten Beleuchtungszustand ist entweder die gesamte Tastenfläche beleuchtet oder der Rand selbst ist unbeleuchtet, so dass sich der Schriftzug in der Tastenmitte gegenüber dem Rand abheben kann. In einer weiteren Ausführungsform können die Schriftzüge in der ersten Ausführungsform auch in einer Matrixanzeige dargestellte werden, die in die Tasten jeweils integriert ist. In dem zweiten Beleuchtungszustand wird die Matrixanzeige deaktiviert, während der äußere Tastenrand beleuchtet wird.

Bei den Ausführungsbeispielen gemäß der Figur 3 sind entweder für alle Tasten der erste oder für alle Tasten der zweite Beleuchtungszustand möglich. Es wäre jedoch auch möglich, dass eine Mischung möglich ist, so dass eine oder mehrere der Tasten 41, ..., 45 im ersten Beleuchtungszustand betrieben werden, während andere Tasten im zweiten Beleuchtungszustand betrieben werden, wobei zu diesen Tasten dann entsprechende Funktionen in der Anzeige dargestellt werden.

Bei dem hier dargestellten Ausführungsbeispiel sind fünf Tasten vorgesehen. Es können jedoch auch mehr oder weniger Tasten vorgesehen sein. In der bereits erläuterten Auswahl eines alternativen Menüs mittels der fünften Taste 45 sind mehr Funktionen auswählbar, als darstellbar bzw. mit Tasten momentan auswählbar sind. Es kann aber auch der Fall auftreten, dass weniger Funktionen auswählbar sind, als Tasten zur Verfügung stehen. Ausgehend von der Figur 4 könnte sich z.B. die Funktionsauswahl auf die drei Funktionen 51, 52, 53 beschränken. In diesem Fall blieben die vierte Taste 44 und die fünfte Taste 45 vollständig unbeleuchtet. Ebenfalls würden in dem Bereich 36 die Erläuterungen sowie die Pfeildarstellungen 37 mit Zuordnungen zu der vierten Taste 44 und der fünften Taste 45 wegfallen. Auch in dem ersten Beleuchtungszustand könnten weniger Funktionen aufrufbar sein, als Tasten vorhanden sind. Für den Fall, dass die Fahrerinformationsvorrichtung nicht über eine Fernsehfunktion verfügt, könnte z.B. die fünfte Taste 45 mit der Beschriftung "TV" in der Figur 3 unbeleuchtet bleiben, da eine Fernsehfunktion nicht oder derzeit nicht auswählbar wäre, z.B. um den Fahrer nicht abzulenken, während das Fahrzeug fährt.

In einer weiteren Ausführungsform ist an der Oberfläche der Anzeige- und Bedieneinheit ein weiteres Bedienelement 59 angeordnet, das ebenfalls als eine Drucktaste ausgeführt ist. Wird das Bedienelement 59 in dem ersten Beleuchtungszustand aktiviert, so entfaltet seine Bedienung in einer ersten Ausführungsform keine Wirkung. In einer weiteren Ausführungsform wird ein Benutzer über eine in der Anzeigefläche dargestellte Abfrage gefragt, ob er die Fahrerinformationsvorrichtung ausschalten will. Diese Wahl kann er dann gegebenenfalls mit der zweiten Taste 42 oder der vierten Taste 44 treffen (zweite Taste 42 ja, ausschalten; vierte Taste 4, nein, zurückschalten zum Hauptmenü). Eine solche Auswahl wird gegebenenfalls durch eine entsprechende Darstellung in der Anzeige unterstützt. Wird das Bedienelement 59 betätigt, wenn ein Untermenü in dem Bereich 36 in der Anzeige 31 dargestellt wird, so wird sofort in das Hauptmenü zurückgeschaltet und der erste Beleuchtungszustand der Tasten wird hergestellt. Da die in dem Bereich 36 dargestellten Funktionen auch weitere Unterfunktionen haben können, wird es somit einem Benutzer ermöglicht, unmittelbar in das Hauptmenü zur Auswahl einer anderen Hauptfunktion der Fahrerinformationsvorrichtung umzuschalten. In einer bevorzugten Ausführungsform wird damit das ausgewählte Programm, z.B. die Navigation, nicht abgebrochen, sondern weitergeführt, so dass der Fahrer eine Fahrtroute berechnen lassen kann und anschließend einen gewünschten Radiosender einstellen kann.

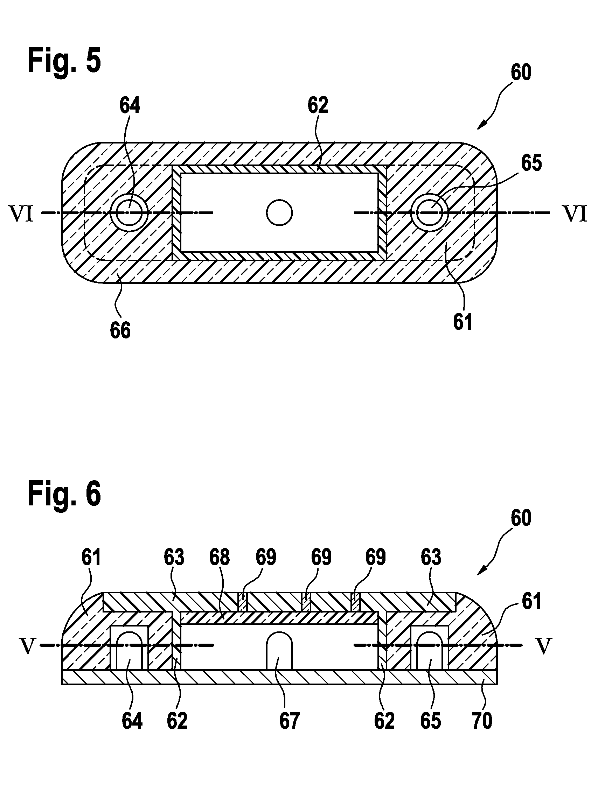

In den Figuren 5 und 6 ist eine Tastenkappe für eine erfindungsgemäße Bedieneinheit dargestellt. Eine Lagerung der Tastekappe und eine Auslösevorrichtung zur Detektion einer Tastenbetätigung entspricht herkömmlichen Tasten und ist daher nicht gezeigt. Während die Figur 5 einen Längsschnitt darstellt, zeigt die Figur 6 einen Querschnitt, wobei der Schnitt entsprechend der Figur 6 in der Figur 5 mit "VI" und der Schnitt gemäß der Figur 5 in der Figur 6 mit "V" bezeichnet ist. In dem hier gezeigten Ausführungsbeispiel weist die Tastenkappe 60 einen Lichtleiter 61 auf, der auf einer Leiterplatte 70 angeordnet ist. Den Lichtleiter 61 umgibt eine lichtdichte Abdeckung 62, die in eine im wesentlichen ebenfalls lichtdichte Tastenabdeckung 63 übergeht. Auf der Leiterplatte 70 sind eine erste Lichtquelle 64 und eine zweite Lichtquelle 65 angeordnet. Diese sind von dem Lichtleiter 61 derart umgeben, dass das von den Lichtquellen 64, 65 erzeugte Licht in den Lichtleiter 61 eingekoppelt wird. Der Lichtleiter 61 ist aus einem transparenten, lichtleitenden Material geformt. Der Lichtleiter 61 ist bevorzugt in einem Zwei-Komponenten Spritzgussverfahren mit der Tastenabdeckung 63 bzw. der Abdeckung 62 verbunden worden. Die Lichtquellen 64, 65 sind dabei bevorzugt als Leuchtdioden ausgeführt. Elektrische Anschlussdrähte zur Spannungsversorgung der Lichtquellen 64, 65 sind in der Zeichnung nicht dargestellt. In einer bevorzugten Ausführungsform werden die Lichtquellen 64, 65, die auf der Leiterplatte 70 montiert sind, bevorzugt über nicht gezeichnete Federkontakte mit einer Betriebsspannung versorgt, die zwischen der Leiterplatte 70 und einem nicht gezeigten Kontaktanschluss in einer Tastenkappenaufnahme angeordnet sind. Die Federkontakte halten zugleich die Tastenkappe in ihrer Halterung und sorgen für einen Gegendruck gegen eine Betätigung einer Druckkraft auf die Tastenkappe 60. Das in den Lichtleiter 61 eingekoppelte Licht wird in einem Randbereich 66 des Lichtleiters 61 ausgekoppelt und ist daher für einen Benutzer sichtbar, indem ein Rand rings um Tastenabdeckung 63 gebildet wird, die den zentralen Tastenbereich abdeckt. Werden die erste und zweite Lichtquelle 64, 65 betrieben, so erscheint die Taste gemäß der Ausführung in der Figur 4 mit einer Randbeleuchtung. Damit ist eine Beleuchtung gemäß dem zweiten Beleuchtungszustand realisiert.

Innerhalb der Abdeckung 62 befmdet sich eine dritte Lichtquelle 67, die in dem zweiten Beleuchtungszustand inaktiv ist. Der zentrale Bereich der Taste erscheint daher dunkel. Wird nun in den ersten Beleuchtungszustand umgeschaltet, so werden die erste und die zweite Lichtquelle 64, 65 deaktiviert. Der Randbereich 66 erscheint daher dunkel. Zwischen der dritten Lichtquelle 67 und der Tastenabdeckung 63, die bevorzugt aus einem intransparenten, dunklen Kunststoffmaterial gefertigt ist, ist ein Diffusor 68 angeordnet, der das von der dritten Lichtquelle 67 ausgestrahlte Licht homogenisiert. In die Tastenabdeckung 63 sind entsprechend transparente Bereiche 69 derartig eingebracht, so dass für den Benutzer eine Symboldarstellung bzw. eine Textdarstellung in dem zentralen Tastenbereich entsteht. Das durch den Diffusor 68 homogenisierte Licht tritt durch diese transparenten Bereiche 69 aus der Tastenkappe 60 aus, so dass für den Betrachter die hierzu dargestellte Information in Symbol- bzw. Textform sichtbar ist.

## Patentansprüche

1. Bedieneinheit für ein elektronisches Gerät mit einer Anzeige (4, 31) und mit benachbart zu der Anzeige angeordneten Tasten (5, 41, 42, 43, 44, 45, 60), wobei die Tasten in einem ersten Beleuchtungszustand der Tasten Funktionen anzeigen, die über eine Betätigung der Tasten jeweils auswählbar sind und wobei in einem zweiten Beleuchtungszustand der Tasten über die Tasten (5, 41, 42, 43, 44, 45, 60) Funktionen auswählbar sind, die in der benachbarten Anzeige (4, 31) dargestellt sind.

2. Bedieneinheit nach Anspruch 1, **dadurch gekennzeichnet, dass** in den Tasten (5, 41, 42, 43, 44, 45, 60) dargestellten Funktionen Hauptfunktionen des elektronischen Geräts sind.

3. Bedieneinheit nach einem der vorherigen Ansprüche, **dadurch gekennzeichnet, dass** nach einer Auswahl einer der Hauptfunktionen in den zweiten Beleuchtungszustand der Tasten (5, 41, 42, 43, 44, 45, 60) umgeschaltet wird und dass in der Anzeige (4, 31) Unterfunktionen zu der jeweils ausgewählten Hauptfunktion dargestellt sind.

4. Bedieneinheit nach Anspruch 3, **dadurch gekennzeichnet, dass** nach einer Auswahl einer Hauptfunktion die ausgewählte Hauptfunktion (56) in der Anzeige (4, 31) dargestellt wird.

5. Bedieneinheit nach einem der vorherigen Ansprüche, **dadurch gekennzeichnet, dass** eine Menütaste (59) zu einem Zurückschalten auf eine Auswahl der Hauptfunktionen und den ersten Beleuchtungszustand vorgesehen ist.

6. Bedieneinheit nach einem der vorherigen Ansprüche, **dadurch gekennzeichnet, dass** in die Tasten jeweils mindestens eine Beleuchtungseinheit angeordnet ist und dass die mindestens eine Beleuchtungseinheit (67) in dem ersten Beleuchtungszustand derart ansteuerbar ist, dass eine Tastenbeschriftung in dem ersten Beleuchtungszustand lesbar ist.

7. Bedieneinheit nach Anspruch 6, **dadurch gekennzeichnet, dass** zur Herstellung der Beleuchtungszustände der Tasten mehrere Lichtquellen (64, 65, 67) in die Tasten integriert sind.

8. Bedieneinheit nach einem der Ansprüche 1-5, **dadurch gekennzeichnet, dass** jeweils eine Matrixanzeige in die Tasten integriert ist.

9. Bedieneinheit nach einem der vorherigen Ansprüche, **dadurch gekennzeichnet, dass** die in dem ersten Beleuchtungszustand sichtbare Tastenbeschriftung in dem zweiten Beleuchtungszustand unsichtbar ist.

10. Bedieneinheit nach einem der vorherigen Ansprüche, **dadurch gekennzeichnet, dass** in dem zweiten Beleuchtungszustand wenigstens ein Rand (58) der Taste beleuchtet ist.

11. Bedieneinheit nach einem der vorherigen Ansprüche, **dadurch gekennzeichnet, dass** zur Herstellung der Beleuchtungszustände der Tasten mehrere Lichtquellen (64, 65, 67) in die Tasten integriert sind.
